# EUROPÄISCHE PATENTSCHRIFT

(11) **EP 1 050 941 B1**
(45) Veröffentlichungstag und Bekanntmachung des Hinweises auf die Patenterteilung: **01.10.2008**
(21) Anmeldenummer: 00108522.4
(22) Anmeldetag: 19.04.2000
(51) Int. Cl.: H02G 3/18

(54) **Tragring für ein elektrisches Installationsgerät**
Support ring for electrical installation apparatus
Bague de support pour appareillage d'installation électrique

(30) Priorität: 05.05.1999 DE 19920653
(43) Veröffentlichungstag der Anmeldung: 08.11.2000
(73) Patentinhaber: ABB AG, 68309 Mannheim (DE)
(72) Erfinder: Lisson, Werner, Dipl.-Ing., 58093 Hagen (DE)

(56) Entgegenhaltungen:
- DE-C- 653 484
- DE-U- 1 974 682
- DE-U- 7 605 036

## Beschreibung

Die Erfindung bezieht sich auf einen Tragring für ein elektrisches Installationsgerät gemäß dem Oberbegriff des Anspruchs 1. Die Erfindung kann beispielsweise bei Doppelsteckdosen, Schlüsselschaltern und Jatousieschaltern mit Profilhalbzylindern verwendet werden.

Aus der DE 76 05 036 U ist ein elektrisches Installationsgerät, wie Schalter, Taster, Steckdose oder dergleichen mit Sockel (Einsatz) und Tragplatte (Tragring) bekannt. Die Tragplatte weist an zwei gegenüberliegenden Seiten Stege (abgewinkelte Laschen) auf, an deren freien Enden der Sockel befestigt ist. An diesen Enden weisen die Stege Öffnungen für die Montage von Spreizkrallen auf.

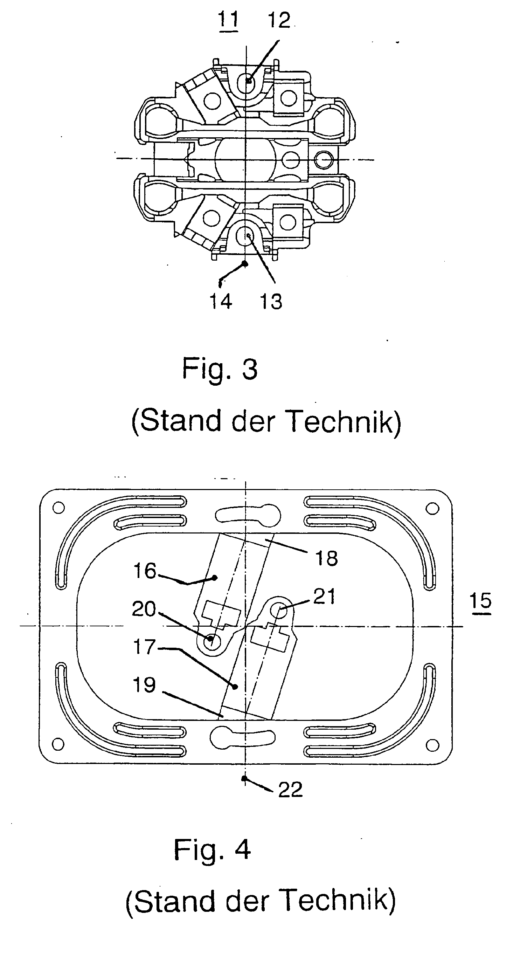

Bei elektrischen Installationsgeräten zur Unterputzmontage ist es allgemein bekannt, einen metallenen Tragring zur Befestigung eines Einsatzes, beispielsweise eines Doppelsteckdoseneinsatzes, vorzusehen. In Fig. 3 ist ein derartiger Einsatz 11 dargestellt. Um bei Einsätzen größerer Tiefe eine flache Bauweise des elektrischen Installationsgerätes zu erzielen, werden Gerätedosen mit größerer Einbautiefe eingesetzt. Zur Anpassung an die größere Einbautiefe des Einsatzes ist eine verlängerte Ausbildung der den Einsatz tragenden Laschen des Tragrings erforderlich.

In Fig. 4 ist ein einteilig ausgeführter Tragring für ein elektrisches Installationsgerät mit verlängerten Laschen gemäß dem Stand der Technik dargestellt. Die Fig. zeigt den aus einer Metallplatte ausgestanzten Tragring 15 (Zuschnitt) vor dem erforderlichen rechtwinkligen Umbiegen der beiden Laschen 16, 17. Wie die Fig. 4 zeigt, ergeben sich aufgrund der relativ langen Laschen 16, 17 Probleme hinsichtlich der zweckmäßigen Anordnung der Laschen 16, 17 für den Stanzvorgang. Die Laschen 16 bzw. 17 müssen umständlich mit dreieckförmigen Versatzstücken 18 bzw. 19 versehen werden, um eine Abwinkelung der Laschen zu erzielen, d. h. um beide Laschen um einen Winkel gegeneinander zu versetzen und aneinander vorbeizuführen. Aufgrund des aufwendigen und umständlichen Verschnitts kann die Breite der Laschen 16, 17 nur relativ gering gehalten werden, was wegen der geforderten großen Einbautiefe problematisch hinsichtlich der zu fordernden Stabilität des Tragrings 15 ist.

Ein weiteres Problem stellt das notwendige präzise Umbiegen der Laschen 16, 17 dar. Nach erfolgtem Umbiegen um 90° müssen die zur Befestigung des Einsatzes 11 dienenden Aufnahmebohrungen 20, 21 der Laschen 16, 17 exakt auf der durch die Mittelachse 22 des Tragrings 15 in Richtung Einbautiefe aufgespannten Ebene liegen, um mit der Mittelachse 14 des Einsatzes 11 übereinzustimmen und folglich eine Befestigung des Einsatzes 11 über seine Aufnahmebohrungen 12, 13 mit den Aufnahmebohrungen 20, 21 des Tragrings 15 zu ermöglichen.

Der Erfindung liegt die Aufgabe zugrunde, einen Tragring für ein elektrisches Installationsgerät der eingangs genannten Art anzugeben, welcher auch bei vergrößerter Einbautiefe und folglich verlängerten Laschen mechanisch sehr stabil ausgebildet ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die Laschen des vorgeschlagenen Tragrings für ein elektrisches Installationsgerät quasi beliebig lang sein können, um die gewünschte Höhe des Tragrings zu realisieren, ohne daß sich dabei Probleme bei der Herstellung des Tragringes ergeben würden. Die Herstellung des Tragrings gestaltet sich sehr einfach. Insbesondere ist kein aufwendiger Verschnitt aufgrund eines umständlichen gegenseitigen Versatzes der Laschen im Zuschnitt erforderlich. Das Fügeverfahren zur Verbindung beider Tragringhälften kann einfach in die Montagelinie integriert werden.

Durch entsprechend beliebig breit ausgebildete Laschen ist eine mechanisch stabile Ausbildung des Tragrings stets sichergestellt, was insbesondere bei der gewünschten hohen Ausbildung des Tragrings von Wert ist.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: einen Tragring für ein elektrisches Installationsgerät,
- Fig. 2: die beiden Tragringhälften vor dem Zusammenfügen,
- Fig. 3: einen Einsatz, insbesondere Doppelsteckdoseneinsatz (Stand der Technik),
- Fig. 4: einen Tragring für ein elektrisches Installationsgerät gemäß dem Stand der Technik.

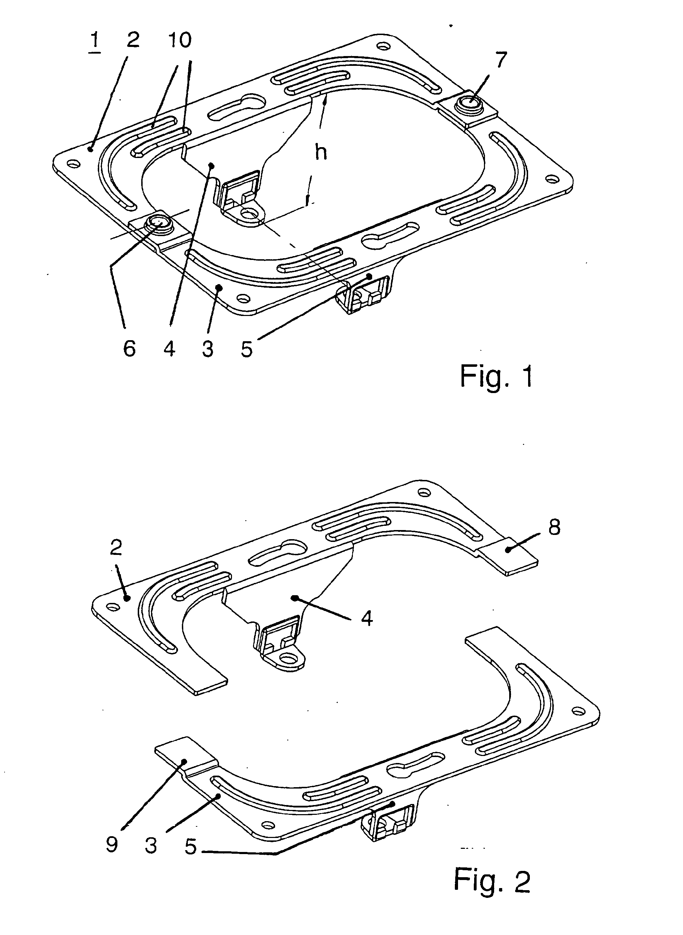

In Fig. 1 ist ein Tragring für ein elektrisches Installationsgerät dargestellt. Der zweiteilige Tragring 1 ist aus einer ersten Tragringhälfte 2 und einer zweiten Tragringhälfte 3 zusammengesetzt. Jede der U-förmigen Tragringhälften 2 bzw. 3 weist eine abgewinkelte Lasche 4 bzw. 5 für die Befestigung eines Einsatzes, beispielsweise eines in Fig. 3 gezeigten Einsatzes 11, insbesondere Doppelsteckdoseneinsatzes, auf. Die Laschen 4, 5 sind sehr breit ausgebildet, wodurch eine hohe Stabilität erzielt und ein Abknicken sicher verhindert wird. Vorzugsweise sind beide Tragringhälften 2, 3 mit doppelten Sicken versehen, wodurch ein Verbiegen des Tragrings 1 verhindert wird. Der so ausgebildete Tragring 1 hat trotz seiner relativ großen, die gewünschte Einbautiefe des Einsatzes realisierenden Höhe h eine große Stabilität.

Die beiden Tragringhälften 2, 3 sind an ihren offenen Enden beispielsweise mittels Nieten 6, 7 miteinander verbunden. Die beiden Tragringhälften 2, 3 können alternativ miteinander formschlüssig verbunden, verschweißt, verlötet oder verklebt sein.

In Fig. 2 sind die beiden Tragringhälften 2, 3 vor dem Zusammenfügen dargestellt. Wie zu erkennen ist, ist jeweils ein offenes Ende jeder Tragringhälfte 2 bzw. 3 mit einer Abwinkelung 8 bzw. 9 versehen, wodurch erreicht wird, daß die zu den Laschen 4, 5 weisenden Oberflächen der Trägringhälften 2, 3 insgesamt eine bündige Fläche bilden, was zur korrekten Montage des elektrischen Installationsgerätes in der Einbaudose erforderlich ist.

## Patentansprüche

1. Tragring für ein elektrisches Installationsgerät zur Befestigung eines Einsatzes (11), welcher an abgewinkelten Laschen (4, 5) befestigt ist, **gekennzeichnet durch** eine Ausbildung aus zwei getrennt produzierten und miteinander verbundenen Tragringhälften (2, 3).

2. Tragring nach Anspruch 1, **dadurch gekennzeichnet, daß** jeweils ein offenes Ende jeder Tragringhälfte (2, 3) eine Abwinkelung (8, 9) aufweist.

3. Tragring nach Anspruch 1 und/oder 2, **dadurch gekennzeichnet, daß** die beiden Tragringhälften (2, 3) miteinander vernietet sind.

4. Tragring nach Anspruch 1 und/oder 2, **dadurch gekennzeichnet, daß** die beiden Tragringhälften (2, 3) miteinander verschweißt sind.

5. Tragring nach Anspruch 1 und/oder 2, **dadurch gekennzeichnet, daß** die beiden Tragringhälften (2, 3) miteinander verlötet sind.

6. Tragring nach Anspruch 1 und/oder 2, **dadurch gekennzeichnet, daß** die beiden Tragringhälften (2, 3) miteinander verklebt sind.

7. Tragring nach Anspruch 1 und/oder 2, **dadurch gekennzeichnet, daß** die beiden Tragringhälften (2, 3) miteinander formschlüssig verbunden sind.

## Claims

1. Supporting ring for an electrical service device for fastening an insert (11), which is fastened on bent-back lugs (4, 5), **characterized by** a formation from two separately produced supporting ring halves (2, 3) which are connected to one another.

2. Supporting ring according to Claim 1, **characterized in that** in each case one open end of each supporting ring half (2, 3) has a bent-back portion (8, 9).

3. Supporting ring according to Claim 1 and/or 2, **characterized in that** the two supporting ring halves (2, 3) are riveted to one another.

4. Supporting ring according to Claim 1 and/or 2, **characterized in that** the two supporting ring halves (2, 3) are welded to one another.

5. Supporting ring according to Claim 1 and/or 2, **characterized in that** the two supporting ring halves (2, 3) are soldered to one another.

6. Supporting ring according to Claim 1 and/or 2, **characterized in that** the two supporting ring halves (2, 3) are adhesively bonded to one another.

7. Supporting ring according to Claim 1 and/or 2, **characterized in that** the two supporting ring halves (2, 3) are connected to one another in an interlocking manner.

## Revendications

1. Bague de support pour appareillage d'installation électrique permettant la fixation d'un insert (11) qui est fixé à des brides coudées (4, 5), **caractérisée par** une structure composée de deux moitiés de bague de support produites séparément et reliées entre elles.

2. Bague de support selon la revendication 1, **caractérisée en ce qu'**une extrémité de chaque moitié de bague de support (2, 3) présente à chaque fois un coude (8, 9).

3. Bague de support selon la revendication 1 et / ou 2, **caractérisée en ce que** les deux moitiés de bague de support (2, 3) sont rivetées l'une à l'autre.

4. Bague de support selon la revendication 1 et / ou 2, **caractérisée en ce que** les deux moitiés de bague de support (2, 3) sont soudées l'une à l'autre.

5. Bague de support selon la revendication 1 et / ou 2, **caractérisée en ce que** les deux moitiés de bague de support (2, 3) sont brasées l'une à l'autre.

6. Bague de support selon la revendication 1 et / ou 2, **caractérisée en ce que** les deux moitiés de bague de support (2, 3) sont collées l'une à l'autre.

7. Bague de support selon la revendication 1 et / ou 2, **caractérisée en ce que** les deux moitiés de bague de support (2, 3) sont reliées l'une à l'autre par complémentarité de forme.
